Europäisches Patentamt

European Patent Office

Office européen des brevets

(19)

(11) Veröffentlichungsnummer: **0 377 816**
**A2**

(12) # EUROPÄISCHE PATENTANMELDUNG

(21) Anmeldenummer: **89121889.3**

(22) Anmeldetag: **27.11.89**

(51) Int. Cl.⁵: **B60R 25/04**

(30) Priorität: **01.12.88 US 278575**

(43) Veröffentlichungstag der Anmeldung:
**18.07.90 Patentblatt 90/29**

(84) Benannte Vertragsstaaten:
**DE FR GB**

(71) Anmelder: **Hauer, Werner**
**40 Fieldcrest Road**
**Parsippany New Jersey 07054-2411(US)**

(72) Erfinder: **Hauer, Werner**
**40 Fieldcrest Road**
**Parsippany New Jersey 07054-2411(US)**

(74) Vertreter: **Patentanwälte Grünecker,**
**Kinkeldey, Stockmair & Partner**
**Maximilianstrasse 58**
**D-8000 München 22(DE)**

(54) **Ein Sicherheits-System für motorbetriebene Fahrzeuge mit im Motorzubehör eingebauten Schaltelementen.**

(57) Ein elektronisches Sicherheits-System für motorbetriebene Fahrzeuge besteht aus einem Steuergerät und einem oder mehreren selbständigen, mit den Steuergerät gekoppelten, Code-Schaltern welche in funktionswichtige Zubehörteile des Motors eingebaut sind. Die Code-Schalter müssen durch vorbestimmte Signale erregt werden um den funktionswichtigen Zubehörteilen ihre Arbeitsfähigkeit zu erlauben. Die Code-Schalter Logic besteht aus Transistor-Logic-Elementen, die Silicon-Compatible sind und gemeinsam auf einen Micro-Chip aufgetragen werden können. Die Code-Schalter sind im Innern der funktionswichtigen Zubehörteile eingebaut, sodass sie völlig unzugänglich sind und eine elektrische Überbrückung oder Beeinflussung unmöglich ist.

Die Code-Schalter verfügen über die Fähigkeit besondere Code-Signale zu erkennen und vorbestimmte Schaltzustände anzunehmen als auch Code-Brechungsversuche zu erkennen und eine zeitweilige Eingangssperre in Kraft zu setzen um schnelle Code-Folgen zu blockieren. Die Code-Schalter können durch geeignete Code-Eingaben neutralisiert werden um Pflege- und Reparatur Personal den Gebrauch des Fahrzeuges ohne besondere Mittel zu erlauben.

Das Sicherheits-System verfügt über eine Anzahl von Arbeitsweisen, die der Wagenbesitzer auswählen kann, um das Fahrzeug der gegenwärtigen Benutzungsweise anzupassen. Das schliesst ein, das Parken in Flughäfen oder Parkhäusern, das Leihen des Wagens an Jugendliche Fahrer, Übergabe an Angestellte, den Verkauf des Wagens, die Rücknahme des Wagens durch die Bank, Wagen Reparatur und Pflege, der Einbau neuer Motorzubehörteile, usw.

EP 0 377 816 A2

STROM

ZENTRAL
STEUER-
GERAET

MOTOR

BILD 2

## Ein Sicherheits-System für motorbetriebene Fahrzeuge mit im Motorzubehör eingebauten Schaltelementen

Die Erfindung bezieht sich auf die Sicherung von motorbetriebenen Fahrzeugen, die, wegen ihres Wertes, einer aussergewöhnlichen Diebstahlsgefahr ausgesetzt sind und die in Folge von Dienstleistungen durch Fremde, Berufsdieben die Möglichkeit geben die Sicherheits-Einrichtungen des Fahrzeuges zu studieren, zu manipulieren, und unschädlich zu machen.

Herkömmliche Sicherheits-Anlagen schützen die Fahrzeuge entweder durch Alarmeinrichtungen, welche Passanten alarmieren und die Diebe abschrecken oder durch elektrische Schutzgeräte, die den Gebrauch des Fahrzeuges nur den Personen erlauben, die mit den Eigenheiten der Schutzgeräte vertraut sind.

Mehrere derartige Alarmeinrichtungen sind im Handel, die entweder auf die mechanischen Bewegungen des Fahrzeuges oder auf die geringste Belastung der Batterie reagieren und eine, im Fahrzeug eingebaute und von aussen nicht zugängliche, Sirene auslösen.

Die zur Zeit im Handel befindlichen Anlagen bieten ausreichenden Schutz gegen Gelegenheitsdiebe, sind aber den Finessen der Berufsdiebe nicht gewachsen. Berufsdiebe nutzen die Tatsache aus, dass Fahrzeuge wiederholt, für mehrere Stunden oder sogar Tage, in Reparaturwerkstätten oder Parkplätzen abgestellt werden und der Zündschlüssel, oder sein Äquivalent, dem Wartungs-Personal überlassen werden muss. Diese Gelegenheit gibt den Berufsdieben die Möglichkeit alle Einzelheiten der Sicherheitsanlage zu studieren und, falls angebracht, Funktionsteile durch Nachbildungen zu ersetzen. Nach einer derartigen Vorbereitung ist es leicht das Fahrzeug plangemäss und in kürzester Zeit, zu stehlen.

Die Erfindung beschreibt ein Sicherheits-System, bei der die kritischen Sicherheits-Elemente, in Form von Code-Schaltern, in das Innere von lebenswichtigen Motor-Zubehörteilen einbaut sind und die Zubehörteile am Arbeiten hindern solange sie nicht in den Einschaltezustand versetzt wurden. Die Code-Schalter werden durch Eingabe einer Code-Nummer, die der im Code-Schalter gespeicherten entsprechen muss, in den Einschaltezustand versetzt. Die Code-Schalter erkennen bestimmte Code-Nummern und werden durch sie in einen dauernden Einschaltezustand versetzt, der solange andauert, wie sich die Code Nummern im Speicher des Code-Schalters befinden, während falsche Code-Nummer Eingaben den Code-Schalter in einen Verzögeruns Zustand versetzen für dessen Dauer jede Code-Nummer Eingabe unterbunden wird. Der Code-Schalter kann auch in elektrisch nicht aktiven Wagenteilen eingebaut werden, um deren Originalität zu überwachen. Das Sicherheits-System hat eine zentrale Steuereinrichtung, in Form eines Eingabe-Gerätes, das eine Tastatur für Nummern-Eingaben hat, welches nahe der Steuersäule ange-bracht ist. Das Eingabe-Gerät kann in ungefährlichen Situationen vom Fahrer so eingestellt werden, dass es die Code-Nummer automatisch sendet, sodass der Fahrer den Wagen mit dem Zündschlüssel allein starten kann.

Der Einbau der Code-Schalters in das Innere der lebenswichtigen Motor-Zubehörteile macht es den Dieben unmöglich diese durch elektrische Verbindungen zu umgehen. Sie müssten das Motor-Zubehörteil ausbauen und es zerlegen oder müssten es ersetzen. Die Verwendung von Code-Nummern bringt est mit sich, dass die Code-Schalter einen Speicher für die Schlüssel-Nummer enthalten, mit der die, vom Fahrer eingegebene, Code-Nummer auf Gleichwertigkeit geprüft wird und nur im Falle einer Übereinstimmung der Einschaltezustand herbeigeführt wird. Da die Speicherelemente nur Code-Daten empfangen und nicht wiedergeben, ist es den Dieben nicht möglich die gespeicherte Schlüssel-Nummer zu entziehen und zu gebrauchen. Die Möglichkeit durch spezielle Code-Nummern einen andauernden Einschaltezustand einzuberufen erlaubt es dem Wagenbesitzer sein Fahrzeug zur Wartung und zur Reparatur zu geben ohne dass er dem Personal die Code-Nummer übergeben muss. Damit vermeidet er die Code-Nummer oder die Funktion des Sicherheits-Systems preisgeben zu müssen. Nach Empfang des Wagens kann er das Fahrzeug wieder in den Alarm Zustand setzen und Bestätigung erhalten, dass alle Code-Schalter anwesend und arbeitsfähig sind, was auch bestätigt, dass keines der gesicherten Motor-Zubehörteile ausgetauscht worden ist.

Die Technik lebenswichtige Motor-Zuberhörteile arbeitsunfähig zu machen und damit die Funktion des Motors völlig zu unterbinden, verhindert es, dass das Fahrzeug mit eigener Kraft fortbewegt werden kann, was die Sicherung des Fahrzeuges von der Anwesenheit und der Aufmerksamkeit des Puplikums völlig unabhängig macht. Nur der Ersatz der gesicherten Motor-Zubehörteilen mit neuen ungesicherten Teilen würde es Dieben erlauben das Fahrzeug funktionsfähig zu machen.

Der Einbau von Code-Schaltern in das Innere von lebenswichtigen Motor-Zubehörteilen, wie den Anlasser, die Zündung, die Elektrische Kupplung usw, verhindert es, dass Diebe mit Fachkenntnissen das System elektrisch umgehen können. Die Unzugänglichkeit der gespeicherten Schlüssel-Nummer und die Verzögerung von Code-Eingaben nach falschen Nummern, verhindert das Brechen des Codes mit automatischen Nummerngebern. Handeingaben müssen eine Durchschnittsverzögerung vom mehr als sechs Monaten erwarten.

Ein Sicherheits-System dieser Art erschwert den Diebstahl eines Fahrzeuges so sehr dass es wegen des Aufsehens und der grossen Zeitverzögerung als unrentabel und zu riskant angesehen wird.

Ein Anwendungsfall ist nachstehend, für den Sicherheitsfall, ausführlich beschrieben und mit Zeichnungen erklärt. Die Anwendung bezieht sich auf einen Personenkraftwagen (PKW) mit herkömmlichen Zündschlüssel, die mit geringen Ableitungen aber auch auf LKW's und Bau- und Landwirtschafts-Maschinen oder auf Fahrzeuge mit Zündschlüsseläquivalenten angewendet werden kann.

Bild 1 zeigt einen PKW mit den elektrischen Bausteinen des Sicherheits-Systems in ihrer Zuordnung zu Motor und Kabine.

Bild 2 zeigt einen Code-Schalter innerhalb eines Anlassers mit den verbundenen Steuerteilen.

Bild 3 zeigt die Block-Schaltung des Code-Schalters mit seinen Hauptfunktionselementen.

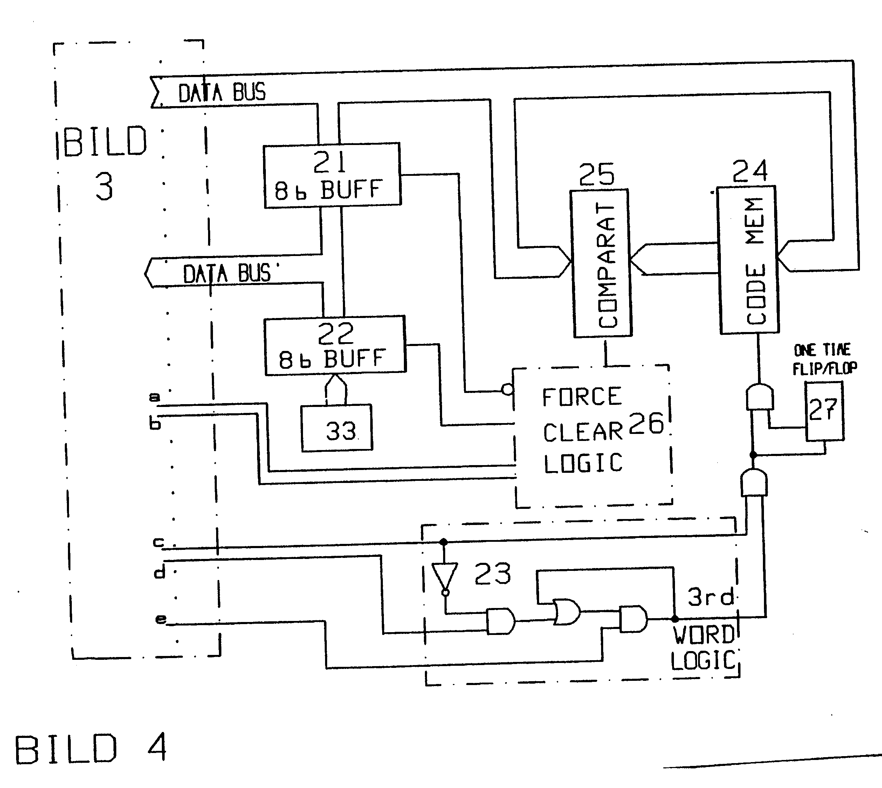

Bild 4 ist die Ergänzung zu Bild 3 und zeigt die Schaltelemente für die Speicherung und Erkennung eines dritten Wortes.

Bild 5 zeigt eine Blockschaltung des Eingabe-Gerätes.

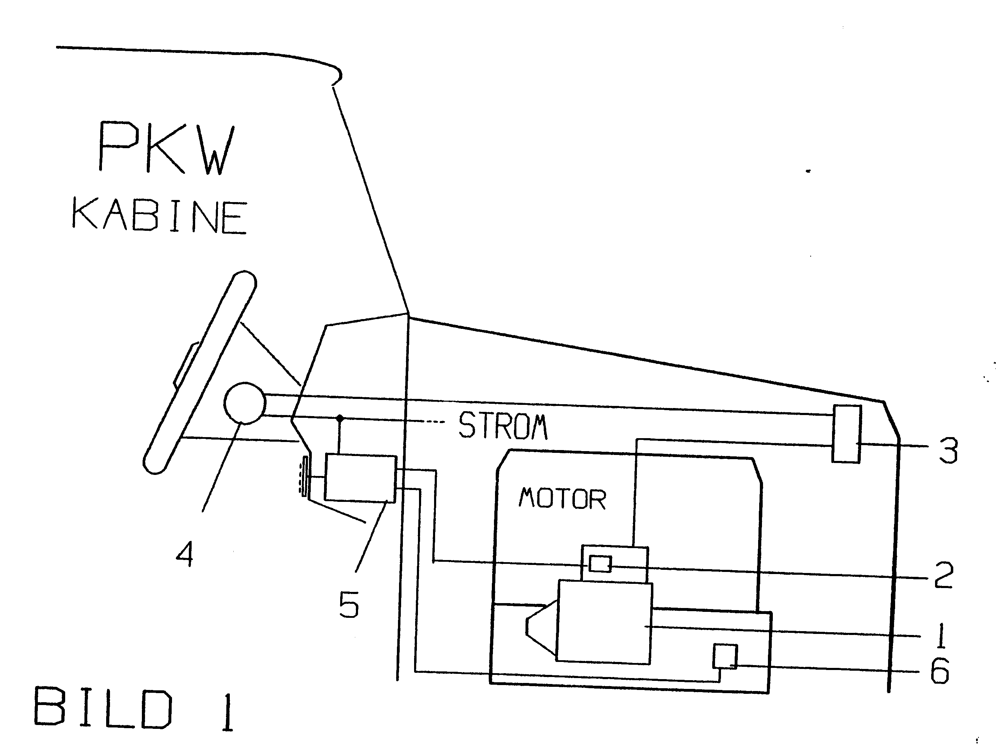

Gemäss Bild 1 besteht das Sicherheits-System aus dem Eingabegerät 5 und den Code-Schaltern 2 und 6. Das Eingabegerät 5 ist im Armaturenbrett des Wagens, in Reichweite des Fahrers, angeordnet. Der Code-Schalter 2 ist im Innern des Anlasser-Magneten angeordnet und Code-Schalter 6 im Innern eines nicht dargestellten Zündverteilers. Die Beschreibung des Arbeitsvorganges beschränkt sich auf die Beeinflussung des Anlassers, was in ähnlicher Weise für alle anderen Motor-Zubehörteile gilt.

Im Ruhezustand sind alle Motor-Elemente stromlos. Alle Code-Schalter enthalten in ihren non-volatilen Memories eine 4-stellige Code-Nummer; das Eingabegerät enthält in seinem non-volatilen Memory eine 4-stellige Code-Nummer, die im ungesicherten Zustand die gleiche ist wie die Nummer der Sicherheitselemente.

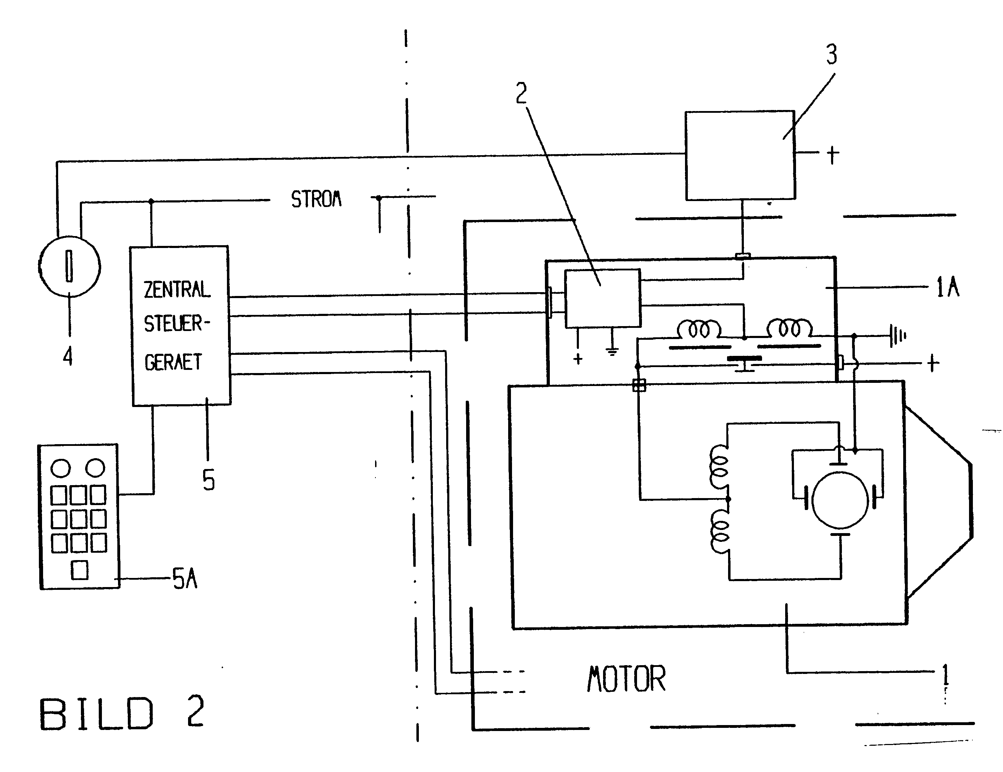

Wenn der Fahrer den Wagen startet, schaltet er mit dem Zündschlüssel erst die Spannung für alle Motor-Elemente ein, wodurch auch das Eingabe-Gerät 5 eingeschaltet wird. Sollte der Fahrer irrtümlicherweise den Zündschlüssel 4 gleich danach in die Start Stellung bringen würde das Anlass Relays 3 eingeshaltet und der Stromkreis zum Anlassermagneten 1A hergestellt werden. Das würde jedoch den Anlassermagneten 1A nicht erregen, da, wie Bild 2 zeigt, der Code-Schalter im Eingangsstromkreis des Elektromagneten liegt und die Leitung unterbrochen ist, da er die richtige Code-Nummer nicht erhalten hat. Das Eingabe-Gerät erhält eine Fehlmeldung vom Code-Schalter und erregt ein akustisches Signal um den Fahrer auf seinen Irrtum aufmerksam zu machen.

Ehe der Fahrer den Zündschlüssel 4 in die Start Stellung bringt, muss er erst eine Code-Nummer in die Tastatur 5A eingeben, die das Eingabe-Gerät 5 an alle Code-Schalter weiterleitet. Die Eingabe einer übereinstimmenden Code-Nummer bringt alle Code-Schalter in den Einschaltezustand, der solange bestehen bleibt wie die Arbeitsspannung des Fahrzeuges eingeschaltet bleibt. Sobald der Fahrer den Zündschlüssel in die Start Stellung bringt, wird das Anlass Relays 3 erregt, welches den Stromkreis für den Anlassermagneten 1A einschaltet und der, da der Code-Schalter 2 durchgeschaltet ist, in Bewegung gesetzt wird und den Motor zum Laufen bringt. Sollte der Fahrer eine falsche Code-Nummer eingeben, wird der Motor nicht zum Laufen gebracht, und wie oben erwähnt, ein akustisches Signal gegeben.

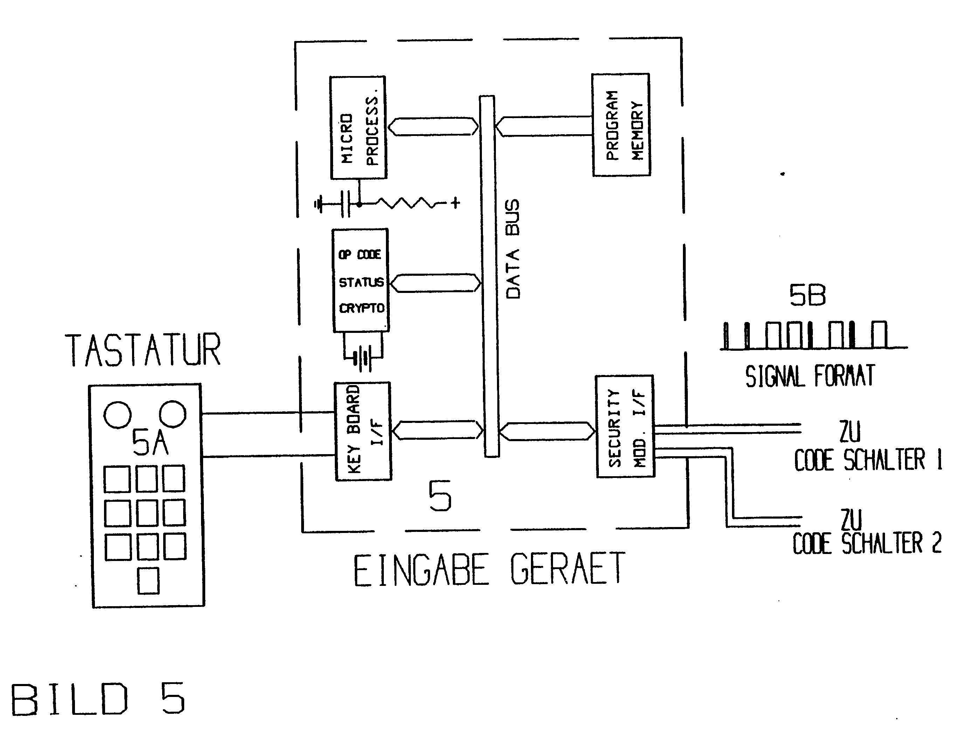

Die elektrisch Funktion verläuft wie folgt: Nachdem der Wagen eingeschaltet wurde und dadurch das Eingabe-Gerät mit Spannung versorgt ist gibt der Fahrer die erwartete Code-Nummer in die Tastatur 5A, die das Eingabe-Gerät in eine Pulse-Gruppe umsetzt, wie es in Bild 5 unter 5B gezeigt ist, und gibt diese zu allen Code-Schaltern weiter.

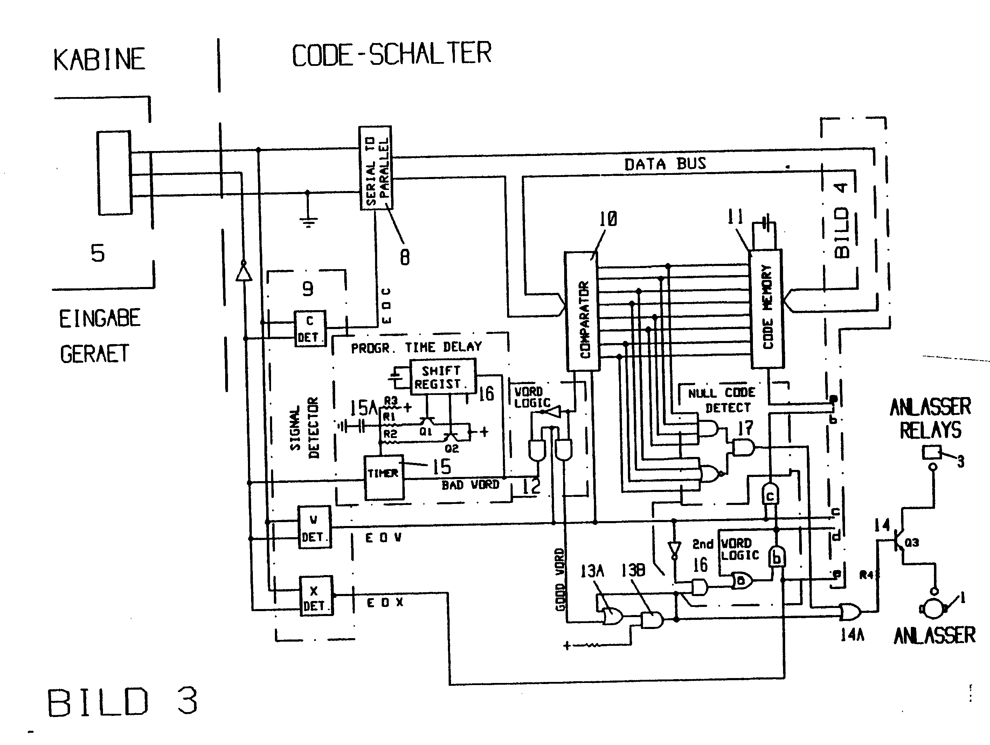

Bild 3 zeigt das Eingabe-Gerät 5 mit dem Code-Schalter über 3 Leitungen verbunden. Eine Hin-, eine Rück-, und eine Erd-Leitung. Diese Verbindungen können durch Optische Leiter und entsprechende Sender und Empfänger ersetzt werden. Das Eingabe-Gerät sendet die Pulse-Gruppe über die Hin-Leitung zum Code-Schalter wo es den Serial to Parallel Converter 8 und den Signal Detektor 9 erreicht. Der Signal Detektor 9 überwacht das eintreffende Signal und signalisiert das Ende jeder Takt-Einheit (EOC), das Ende jedes Wortes (EOW), und das Ende der Transmission (EOX). Am Ende jeder Takt-Einheit erhält der Serial to Parallel Converter B einen Schreib-Puls, der das am Eingang gegenwärtige Signal in die Speicherkette gibt und in dieser Weise die 16 Speicher mit den 16 Pulsen auflädt.

Am Ende des Wortes signalisiert der Signal Detector 9 ein EOW. Das EOW Signal gelangt zum Comparator 10, der die Code-Worte des Serial to Parallel Converter 8 mit dem des Code-Memory 11 vergleicht. Im Falle einer Übereinstimmung zeigt der Ausgang des Comparators 10 ein positives Signal, was die Word Logic 12 in ein "Good Word" Signal umwandelt. Diese "Good Word" Signal bringt die Latch, die aus OR-Gate 13A und AND-Gate 13B besteht in den Durchschaltezustand, was an dessen Ausgang ebenfalls ein positives Signal erscheinen lässt, welches über ein OR-Gate 14A an den Transistor Q3 14 weitergeleitet wird und die Latch in dem Durchschalte-Zustand erhält bis die Spannung des Wagens ausgeschaltet wird.

Der Schaltransistor 14 wird während der Anwesenheit der positiven Spannung leitend und erlaubt, die vom Starter Relays 3 kommende Spannung zum Anlasser-Magneten 1A zu gelangen und den Anlasser 1 zum Laufen zu bringen, was letzten Endes zum Laufen des Motors führt. Sollte der Motor beim ersten Versuch nicht anspringen, kann der Fahrer weitere Versuche machen ohne eine neue Code-Eingabe machen zu müssen solange er den Wagen nicht völlig abschaltet.

Sollte der Comparator 10 feststellen, dass die eingegebene Nummer nicht mit der im Code-Memory 11 gespeicherten Nummer übereinstimmt, wird sein Augang kein positives Signal besitzen. Die Word Logic 12 wird daher ein "Bad Word" Signal liefern. Diese "Bad Word" Signal gelangt zum Timer 15 und zum Shift Register 16. Der Timer 15 geht in den Erregungs-Zustand solange der Kondensator 15A aufgeladen ist. Shift Register 16 geht von Stellung-0 in Stellung-1 und legt eine Spannung an Transistor Q1, wodurch ein niederohmiger Wiederstand in den Entladestromkreis von Kondensator 15A gelegt wird. Der Timer geht innerhalb vom 5 Millisekunden in den Ruhezustand zurück. Der Ausgang des Timers 15 liefert für 5 Millisecunden ein Signal zum Eingabe-Gerät 5, was als "Fehleingabe" verstanden und in ein akustisches Signal umgesetzt wird.

Sollte der Fahrer eine zweite Falsche Nummer eingeben, erfolgt der gleiche Vorgang, nur dass diesmal das Shift Register 16 in Stellung-2 gebracht wird. Auch diese schaltet einen Wiederstand mit Q2 ein, der den gleichen Effekt hervor ruft und den Timer nach 5 Millisekunden in den Ruhezustand zurückversetzt.

Sollte der Fahrer einen dritten Versuch unternehmen, und die dritte Nummer eine richtige sein führt das zum Einschalten von Transistor 14, wie vorstehend beschrieben. Sollte die dritte Nummer eine falsche sein, führt das zur Erregung des Timers 15 und zur Weiterschaltung des Shift Registers 16, welches in Stellung-3 gebracht wird. Stellung-3 verbindet keinen Wiederstand mit dem Entladungskreis und der Timer 15 verbleibt für die volle Entladungszeit des Kondensators 15A erregt. Das Eingabe-Gerät erhält ein andauerndes Signal, das zur Einleitung des Sperr-Zustandes und zu einer Anzeige an der Tastatur verwendet wird. Alle Detektor-Einheiten des Signal-Detektors 9 werden blockiert, sodass jede Code-Eingabe während der Sperrzeit unmöglich wird. Ein Versuch, den Code-Schalter durch Entzug der Betriebsspannung zurückzusetzen bleibt erfolglos, da der Timer 15 sich

beim Eintreffen der Betriebspannung wieder in den Erregungszustand versetzt solange Kondensator 15A noch Ladungsüberreste enthält. Sobald die Sperrzeit vorüber ist werden alle Elemente des Code-Schalters auf den Null-Zustand zurückgebracht und eine darauffolgende Code-Eingabe wird als eine erste Eingabe angesehen und ein neuer Vorgang eingeleitet.

Der Fahrer hat die Möglichkeit den, im Code Memory gespeicherten Schlüssel-Code, zu verändern. Er bewirkt diesen Vorgang durch die Eingabe von zwei aufeinander folgenden Code-Nummern. Die erste muss die zur Zeit gültige Code-Nummer sein und die zweite die erwünschte neue Code-Nummer. Die erste Nummer wird zum Code-Schalter gesandt und schaltet den Erregerstromkreis für den Leitungstransistor 14 ein, was zur Folge hat, dass die Latch 13A/13B aktiviert wird. Nach der Beendigung des EOW Signals wird in der "Second Word Logic" 16 eine weiter Latch 16a und 16b aktiviert, die erregt bleibt bis das EOX Signal gegeben wird. Die zweite Code-Nummer wird in den Serial to Parallel Converter B geladen und ein neues EOW Signal wird danach ausgesandt. Da die Second Word Logic 16 erregt ist, wird das AND-Gate 16C eingeschaltet und sendet an das Code-Memory 11 einen Schreib Befehl. Dadurch wird die, im Serial to Parallel Converter gespeicherte Nummer über die Data Bus ins Code Memory geladen. Alle darauffolgenden Code-Eingaben, die einen Start des Motors einleiten sollen, müssen die Neue Code-Nummer gebrauchen.

Die Schaltung des Code-Schalters, Bild 3, zeigt eine "Null Code Detect" Anordnung 17, die ständig die Ausgänge des Code Memory 11 überwacht. Die Schaltung zeigt ein 8-bit Beispiel, das im Falle der Anwesenheit einer 33 mit der AND/NOR/AND-Gate Kombination ein positives Signal liefert, das über das OR-Gate 14A an den Steuertransistor 14 geleitet wird und das Zubehörteil solange einschaltet wie diese 33 im Code Memory vorhanden ist.

Das Ergänzungsblatt der Schaltung für den Code-Schalter zeigt die Anordnung für die Anwendung eines dritten Wortes. Im nicht erregten Zustand verbindet der 8 bit Buffer 21 den Eingang der Data Bus mit dessen Ausgang und alle Funktionen erfolgen wie vorstehend beschrieben. In dem Fall, dass die Code-Eingabe aus drei Nummern-Gruppen besteht, was nur beim erstmaligen Absetzen des Code-Schalters erfolgen kann, erkennt die 3rd Word Logic 23 das Eintreffen der dritten Code-Nummer und erlaubt dem Code Memory 24 die an der Data Bus befindliche Nummer zu speichern. In diesem Vorgang ist der One-Shot Flip Flop 27 gebraucht, der einen Pulse aussenden muss, um das Code Memory 24 mit dem Schreib Kommando zu versorgen. Diese One-Shot Flip Flop Anordnung ist mit einem Fuseable-Link Komponente bestückt, die beim Gebrauch ausbrennt. Das verhindert, dass ein einmal in den "Dritte Nummer" Speicher eingegebenes Code-Wort jemals verändert werden kann.

In dem Falle, dass jemals eine Code-Nummer eingegeben wird, die mit der im Code-Memory 24 gespeicherten Nummer übereinstimmt, erkennt der Comparator 25 die Übereinstimmung und erregt die Force Clear Logic 26, welche Buffer 21 abschaltet, Buffer 22 einschaltet und an Code Memory 11 ein Schreib-Kommando gibt. Mit dem Einschalten des Buffers 22 wird eine "33" an die Data Bus gelegt, die im Code Memory 11 aufgenommen wird und an dessem Ausgang erscheint. Die Null Code Detect Logic 17 erkennt diesen Code als den vereinbarten Code und bringt den Code-Schalter in den permaneten Durchschalte Zustand was den Gebrauch des Fahrzeuges erlaubt und das Sicherheits-System für eine neue Code Aufladung vorbereitet.


**Ansprüche**

1. Ein elektronisches Sicherheits-System für motorbetriebene Fahrzeuge, das aus einem Steuergerät und einem oder mehrere selbstständige, mit dem Steuergerät gekoppelte Code-Schalter besteht, wobei gesagte Code-Schalter in funktionswichtige Zubehörteile des Motors eingebaut sind, und die Funktion des gesicherten Zubehörteiles und damit des Motors nur dann erlauben, wenn das Steuergerät des Sicherheits-Systems ein entsprechendes Kommando an die Code-Schalter erteilt hat.

2. Ein elektronisches Sicherheits-System nach Anspruch 1, dadurch gekennzeichnet, dass die vom Steuergerät ausgegebenen Kommandos numerische Code-Worte sind, die mit einer Tastatur in das Steuergerät vom Fahrer eingegeben werden können und die im Code-Schalter in spannungsunabhängigen, z.B. Ferroelektrische Memories, gespeichert werden.

3. Ein elektronisches Sicherheits-System nach Anspruch 1 und 2, dadurch gekennzeichnet, dass der Code-Schalter bestimmte Code-Worte als Sonderkommandos erkennt, worauf der Code-Schalter sich in bestimmte Zustände versetzt, wie zum Beispiel in einen andauernden Durchschaltzustand.

4. Ein elektronisches Sicherheits-System nach Anspruch 1 und 2, dadurch gekennzeichnet, dass der Code-Schalter bestimmte Code-Worte als Sonderkommandos erkennt, worauf der Code-Schalter bestimmte Massnahmen vornimmt, wie zum Beispiel das gespeicherte Code-Wort zu ignorieren und den Schalter in den ungesicherten Zustand zurück zuversetzen.

5. Ein elektronisches Sicherheits-System nach Anspruch 1 und 2, dadurch gekennzeichnet, dass der Code-Schalter eine bestimmte Folge von zwei oder mehreren Code-Wort Gruppen als Instruktion erkennt, Code-Worte zu löschen, zu wechseln, oder zu laden.

6. Ein elektronisches Sicherheits-System nach Anspruch 1 und 2, dadurch gekennzeichnet, dass der Code-Schalter eine Folge von falschen Code-Wort Eingaben als Diebstahlversuch erkennt und weitere Eingaben zeitweilig unterbindet.

7. Ein elektronisches Sicherheits-System nach Anspruch 1 und 2, dadurch gekennzeichnet, dass das zentrale Steuergerät mit der Fähigkeit augerüstet ist ein Code-Wort in einem batterie-unabhängigen Memory zu speichern und in der Lage ist dieses Code-Wort beim Einschalten des Fahrzeuges automatisch an seine Code-Schalter auszusenden, um den Fahrer die Code-Eingabe in ungefärlichen Situationen zu ersparen und ihn das Fahrzeug mit den gebräuchlichen Identifizierungsmitteln, wie den Zündschlüssel, starten zu lassen.

8. Ein elektronisches Sicherheits-System nach Anspruch 1 und 2, dadurch gekennzeichnet, dass die Code-Schalter mit elektronischen, unvergesslichen, Speichermitteln versehen sind, die nur eine einmalige Code-Eingabe erlauben da sie selbstzerstörende Elemente in ihren Stromkreisen haben, die beim ersten Gebrauch zerstört werden und weitere Code-Übertragungen an das Speichermittel verhindern.

9. Ein elektronisches Sicherheitselement oder Code-Schalter für ein Sicherheits-System nach Anspruch 1, dadurch gekennzeichnet, dass alle Schaltelemente Single-Die Compatible sind und in einem Prozess gemeinsam auf ein Silicon-Substrate aufgetragen werden können.

PKW
KABINE

STROM

MOTOR

BILD 1

EP 0 377 816 A2

STROM

ZENTRAL
STEUER-
GERAET

3

2

1A

+

+

+

4

5

5A

MOTOR

1

BILD 2

EP 0 377 816 A2

CODE-SCHALTER

KABINE

EINGABE GERAET

DATA BUS

SERIAL TO PARALLEL

COMPARATOR

CODE MEMORY

COMPARATOR

NULL CODE DETECT

2nd WORD LOGIC

SIGNAL DETECTOR

PROGR. TIME DELAY

SHIFT REGIST.

WORD LOGIC

GOOD WORD

BAD WORD

TIMER

C DET

V DET

X DET

ANLASSER RELAYS

ANLASSER

BILD 4

BILD 3

BILD 3

BILD 4

BILD 5